(19) Europäisches Patentamt
European Patent Office
Office européen des brevets

(11) Veröffentlichungsnummer: **0 308 787 B1**

(12) **EUROPÄISCHE PATENTSCHRIFT**

(45) Veröffentlichungstag der Patentschrift: **21.10.92**

(51) Int. Cl.⁵: **C09B 62/51**, C09B 62/085, D06P 1/38

(21) Anmeldenummer: **88114981.9**

(22) Anmeldetag: **14.09.88**

(54) **Reaktivfarbstoffe.**

(30) Priorität: **25.09.87 DE 3732381**

(43) Veröffentlichungstag der Anmeldung: **29.03.89 Patentblatt 89/13**

(45) Bekanntmachung des Hinweises auf die Patenterteilung: **21.10.92 Patentblatt 92/43**

(84) Benannte Vertragsstaaten: **CH DE FR GB LI**

(56) Entgegenhaltungen:
**EP-A- 0 040 806**
**EP-A- 0 177 445**

(73) Patentinhaber: **BAYER AG**
**W-5090 Leverkusen 1 Bayerwerk(DE)**

(72) Erfinder: **Stöhr, Frank-Michael, Dr.**
**Am Thelen Siefen 10**
**W-5068 Odenthal(DE)**
Erfinder: **Henk, Hermann, Dr.**
**Roggendorfstrasse 55**
**W-5000 Köln 80(DE)**
Erfinder: **Herd, Karl-Josef, Dr.**
**Am Gartenfeld 66**
**W-5068 Odenthal(DE)**

EP 0 308 787 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind faserreaktive Azofarbstoffe der Formel

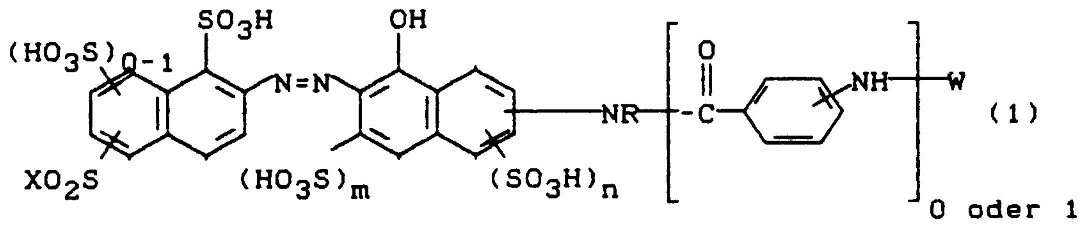

(1)

worin

m = 0 oder 1
n = 0 oder 1 wobei m + n = 1 oder 2,
X Vinyl, $CH_2CH_2$-Y, wobei Y einen unter alkalischen Bedingungen abspaltbaren Rest darstellt,
R = H oder $C_1$-$C_4$-Alkyl, wobei die Alkylgruppen gegebenenfalls durch OH, Halogen, $SO_3H$ oder $OSO_3H$ substituiert sein können,
W = Rest der Formel

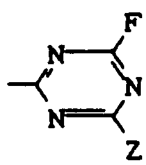

(2)

worin

Z = 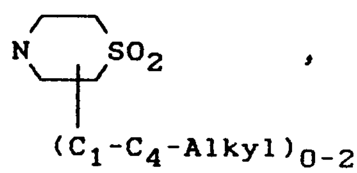 , 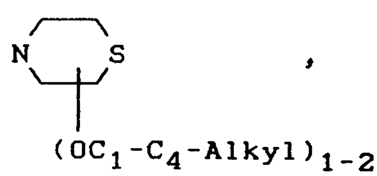 ,

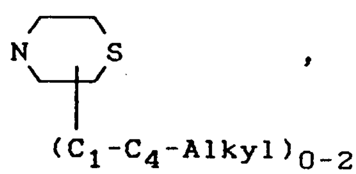 , 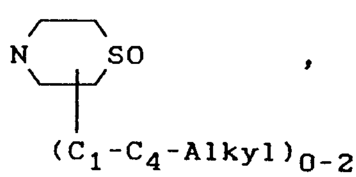 ,

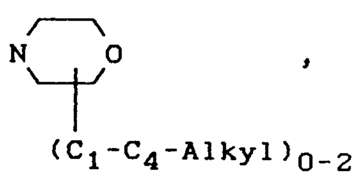 , 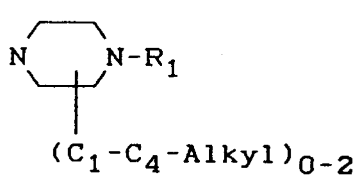

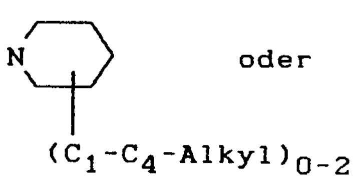 oder 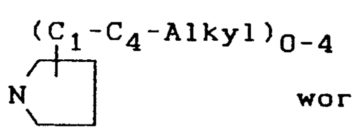 worin

$R_1$ = H oder gegebenenfalls substituiertes $C_1$-$C_6$-Alkyl bedeutet.

Aus der EP-A-177 445 sind bereits Reaktivfarbstoffe bekannt, die aber anstelle des erfindungsgemäß zu verwendenden Fluortriazinrestes einen Chlortriazinrest tragen. Derartige Farbstoffe unterscheiden sich

erheblich in ihren färberischen Eigenschaften.

Als Substituenten für die Alkylreste $R_1$ kommen insbesondere wasserlöslich-machende wie OH, $OSO_3H$, $SO_3H$, COOH in Frage.

Bevorzugte Substituenten $R_1$ sind $C_1$-$C_2$-Alkyl und $C_2$-$C_4$-Hydroxyalkyl. Die $C_1$-$C_4$-Alkylreste können ebenfalls substituiert sein, bspw. durch die für $R_1$ genannten Substituenten.

Beispiele für Y sind: $OSO_3H$, $SSO_3H$, $OCOCH_3$, $OPO_3H_2$, $OSO_2CH_3$, SCN, $NHSO_2CH_3$, Cl, Br, F, $OCOC_6H_5$, $OSO_2C_6H_4CH_3$, $N(CH_3)_3^+Cl^-$.

Bevorzugte Farbstoffe sind solche der Formel

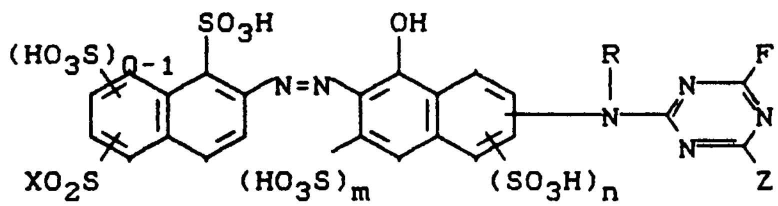

(3)

Hervorzuheben sind dabei Farbstoffe der Formeln (1) und (3) mit R = H oder $CH_3$ und X = $CH_2CH_2$-$OSO_3H$ oder Vinyl. Weiterhin bevorzugt sind Farbstoffe mit Z = Morpholin oder N-Hydroxyethylpiperazin.

Besonders bevorzugte Reaktivfarbstoffe sind solche der folgenden Formeln (6) bis (14), in denen
D für

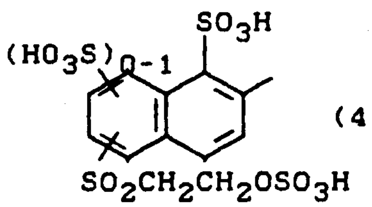

(4) bzw.

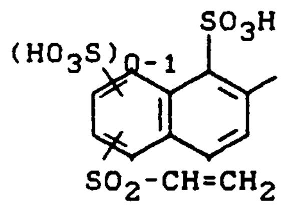

(5),

R′ für Wasserstoff oder Methyl und
A für

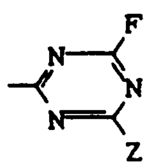

steht,
wobei Z die in Formel (1) angegebene Bedeutung hat:

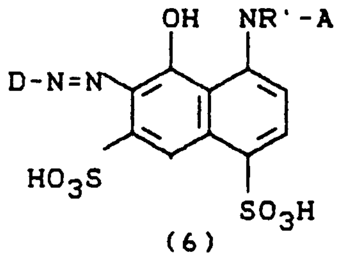

(6)

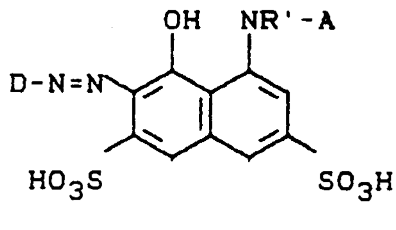

(7)

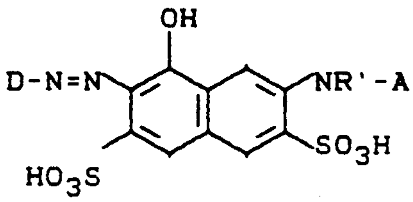

(8)

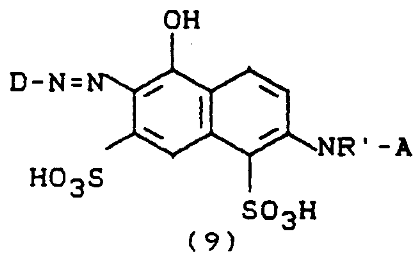

(9)

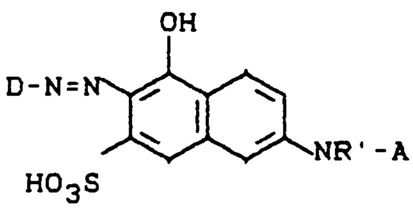

(10)

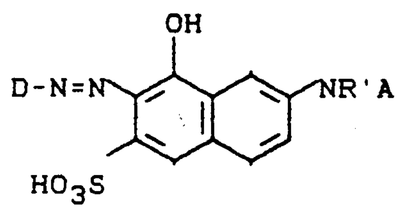

(11)

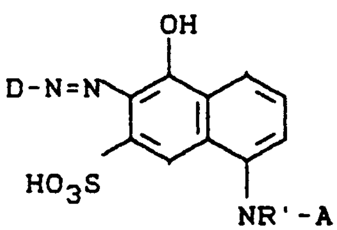

(12)

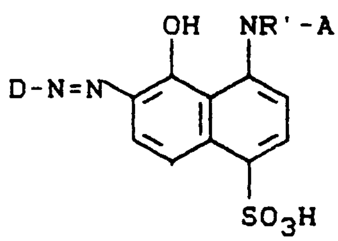

(13)

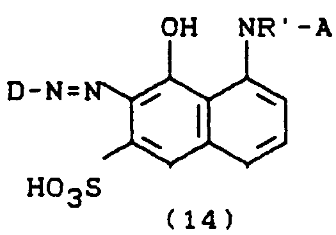

(14)

Ganz generell bevorzugt im Rahmen der Farbstoffe (1) - (14) sind solche mit R = Wasserstoff und Z = Morpholino.

Ganz besonders bevorzugte Farbstoffe sind solche der Formeln

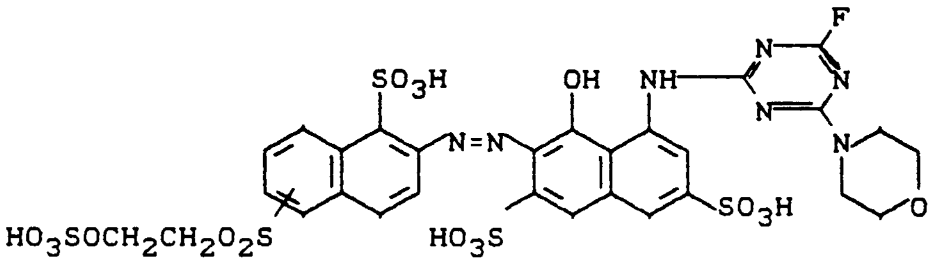

(15)

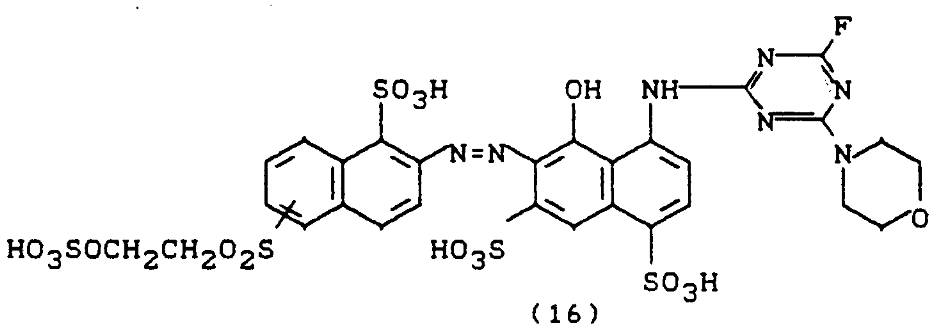

(16)

Die neuen Farbstoffe eignen sich zum Färben und Bedrucken von hydroxyl- und amidgruppenhaltigen Materialien, insbesondere Cellulosematerialien. Sie zeichnen sich durch eine hohe Reaktivität und einen hohen Fixiergrad aus. Die mit diesen Farbstoffen erhältlichen Färbungen oder Drucke auf Cellulosematerialien zeichnen sich außerdem durch eine hohe Faser-Farbstoff-Bindungstabilität sowie durch eine hervorragende Stabilität gegenüber Oxidationsmitteln, wie peroxyd-oder chlorhaltige Waschmittel, aus. Die Auswaschbarkeit der beim Färben oder Drucken nur in geringem Maße entstehenden Hydrolyseprodukte ist ausgezeichnet. Die Farbstoffe besitzen gute Naßechtheiten.

Die erfindungsgemäßen Farbstoffe sind nach den bei der Synthese von Reaktivfarbstoffen üblichen Herstellungsverfahren zugänglich.

So z.B. durch Diazotieren von Aminen der Formel

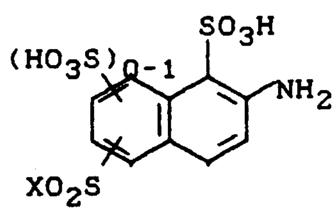

(17)

und Kuppeln der resultierenden Diazoniumverbindungen mit Hydroxynaphthalinsulfonsäuren der Formel (18).

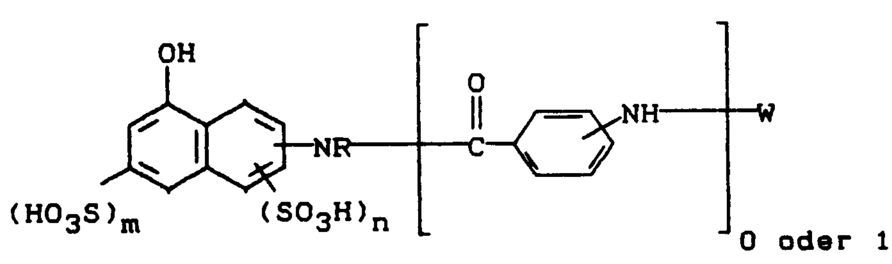

(18)

Die Darstellung der Zwischenprodukte (18) erfolgt beispielsweise, indem man Aminonaphthol-mono- bzw. -disulfonsäuren oder (Aminobenzoyl)aminonaphthol-mono- bzw. -disulfonsäuren an der Aminfunktion nach bekannten Methoden (z. B. EP 40 806, DOS 27 11 150, EP 172 790, DOS 27 47 011) mit Trifluortriazin kondensiert und die resultierenden Difluortriazinylverbindungen mit Aminen HZ in Gegenwart säurebindender Mittel umsetzt.

Geeignete Amine H-Z sind beispielsweise Morpholin, Thiomorpholin, Piperazin, N-Hydroxyethylpiperazin, N-Hydroxypropylpiperazin, Piperidin, Pyrrolidin, Thiomorpholin-1,1-dioxyd, 2,6-Dimethylmorpholin, 2- oder 4-ß-Hydroxyethylpiperidin, 2-ß-Hydroxyethylpyrrolidin.

Gegenstand der Erfindung sind auch die neuen Zwischenprodukte der Formeln

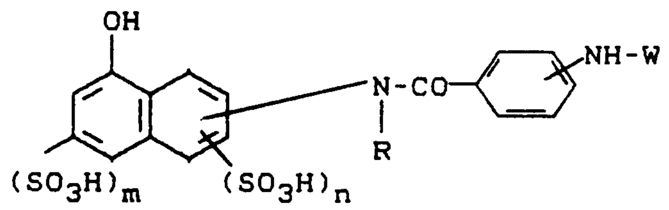

(19)

sowie solche der Formel

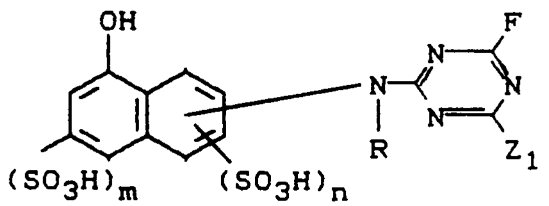

(20)

worin

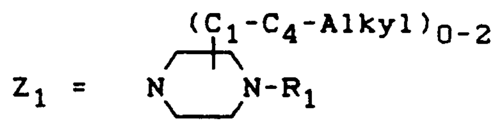

mit $R_1$ = durch wasserlöslich machende Substituenten substituiertes $C_1$-$C_6$-Alkyl;

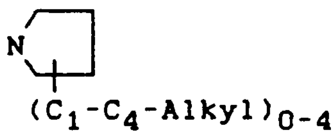 ; 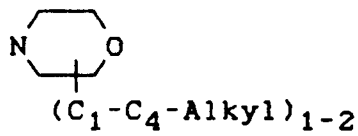 ;

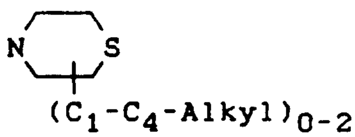 ; 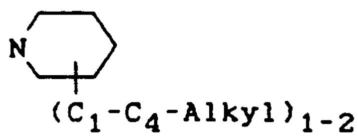 ,

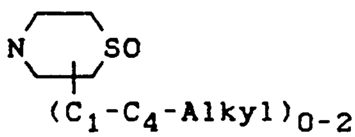 , 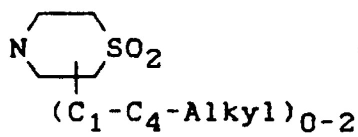 oder

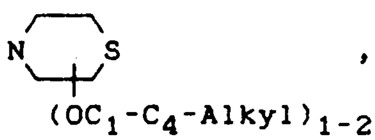 ,

wobei die $C_1$-$C_4$-Alkylgruppen gegebenenfalls substituiert sein können, vorzugsweise durch wasserlöslich machende Substituenten wie OH, $OSO_3H$, $SO_3H$ and COOH.

Die Verbindungen (19) und (20) werden wie oben beschrieben hergestellt.

Einzelheiten können den nachfolgenden Beispielen entnommen werden. Beispiele für die Diazokomponenten (17) sind:

2-Amino-6-(2-sulfatoethylsulfonyl)(bzw. vinylsulfonyl)naphthalin-1-sulfonsäure
2-Amino-5-(2-sulfatoethylsulfonyl)(bzw. vinylsulfonyl)naphthalin-1-sulfonsäure
2-Amino-5-(2-sulfatoethylsulfonyl)(bzw. vinylsulfonyl)naphthalin-1,7-disulfonsäure.

Eine weitere Möglichkeit, die Farbstoffe der Formel (1) darzustellen, besteht darin, den auf üblichem Weg (Diazotierung und Kupplung) hergestellten Farbstoff der Formel

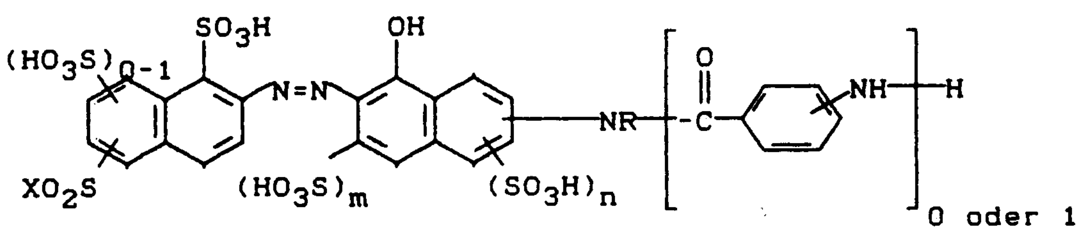

(21)

an der Aminfunktion mit Trifluortriazin und anschließend mit Aminen HZ zu kondensieren.

Die angegebenen Formeln sind die der freien Säuren. Bei der Herstellung werden im allgemeinen die Salze erhalten, insbesondere die Alkalisalze, wie Natrium-, Kalium- oder Lithiumsalze.

<u>Beispiel 1</u>

31,9 g 1-Hydroxy-8-amino-naphthalin-3,6-disulfonsäure werden in 400 ml Wasser neutral gelöst. Bei 0-5°C versetzt man mit 8,8 ml Trifluortriazin und hält durch Zugabe von 20 %iger Natriumcarbonatlösung einen pH von 4,0-4,5. Nach 5 Minuten gibt man 9 g Morpholin hinzu und hält mit 20 %iger Natriumcarbonatlösung pH 8. Nach 10 Minuten bei 10°C ist die Reaktion beendet. Die so erhaltene Lösung der Verbindung der Formel

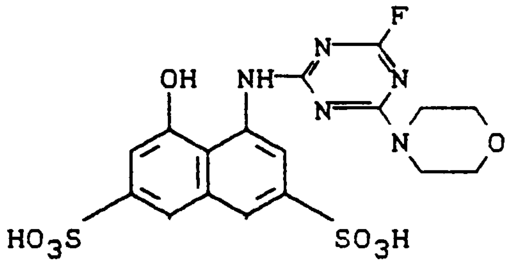

kann direkt nach der folgenden Vorschrift in einen brillanten roten Azoreaktivfarbstoff überführt werden: Zu der erhaltenen Reaktionslösung wird bei 0-5 °C eine auf üblichem Wege hergestellte Diazoniumsalz-Suspension gegeben, die durch Diazotierung von 44,2 g 2-Amino-6-(2-sulfatoethyl)sulfonyl-1-naphthalinsulfonsäure-mono-natriumsalz erhalten wird. Gleichzeitig wird der pH-Wert mit 20 %iger Sodalösung bei 7,0-7,5 gehalten und die Kupplung zu Ende geführt. Der Farbstoff der Formel

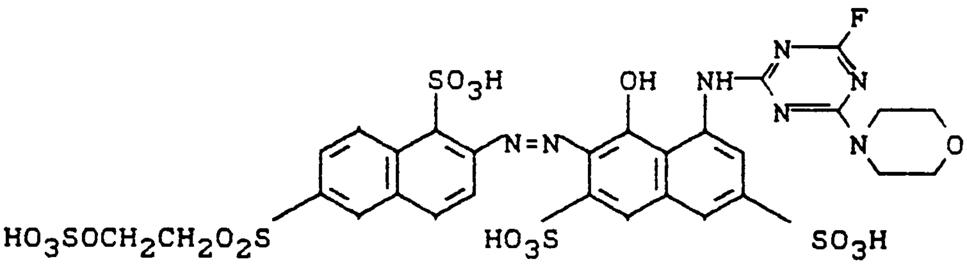

wird ausgesalzen, abgesaugt, getrocknet und gemahlen. Das rote Farbstoffpulver ist in Wasser leicht löslich ($\lambda_{max}$ = 518;540 nm) und färbt Baumwolle in brillantem blaustichigem Rot.

Beispiel 2

Ersetzt man in Beispiel 1 Morpholin durch eine äquivalente Menge N-(2-Hydroxyethyl)-piperazin und arbeitet ansonsten wie in Beispiel 1 beschrieben, so erhält man den Farbstoff der Formel

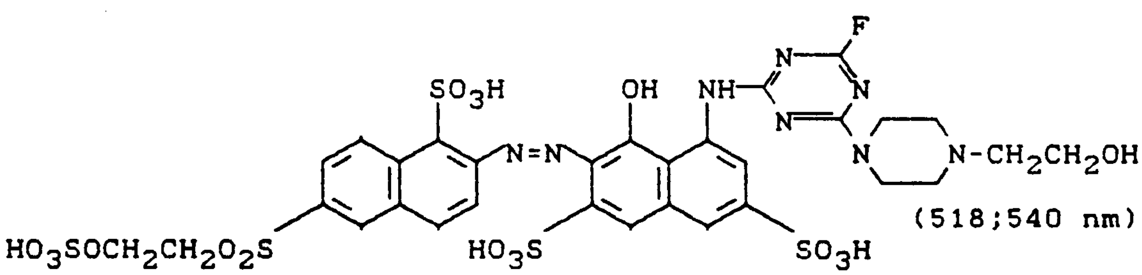

(518;540 nm)

der ebenfalls nach einem für Reaktivfarbstoffe üblichen Applikationsverfahren Baumwolle in klaren blaustichig roten Tönen färbt. Bei Verwendung von Piperidin bzw. Pyrrolidin erhält man ebenfalls wertvolle rote Farbstoffe, die Baumwolle in klaren blaustichig roten Tönen färben.

Beispiel 3

Ersetzt man in Beispiel 1 die 1-Hydroxy-8-amino-3,6-naphthalindisulfonsäure durch die gleiche Menge an 1-Hydroxy-8-amino-3,5-naphthalindisulfonsäure und arbeitet ganz analog zu Beispiel 1, so erhält man den Farbstoff der Formel

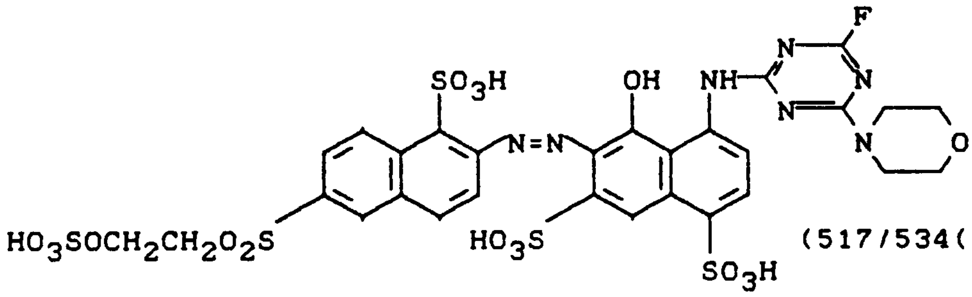

(517/534(sh)nm)

der Baumwolle in brillanten roten Tönen färbt.

Durch Verwendung entsprechender Ausgangsverbindungen erhält man in analoger Weise die folgenden blaustichigroten bifunktionellen Reaktivfarbstoffe:

Beispiel 4

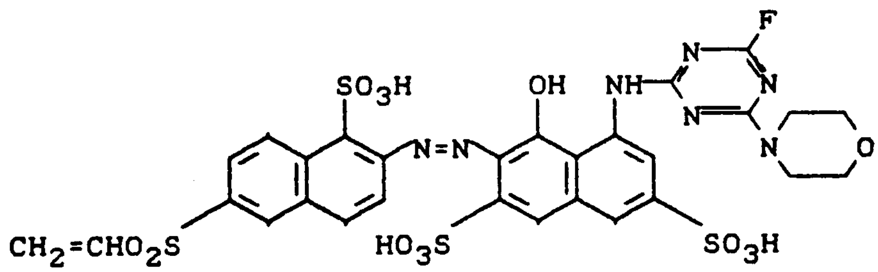

(540 nm)

Beispiel 5

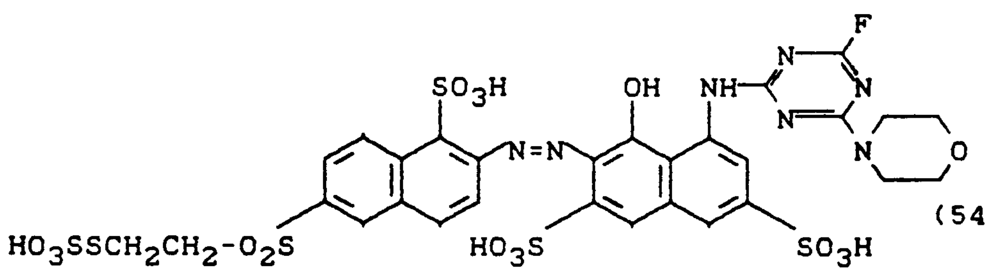

(540 nm)

Beispiel 6

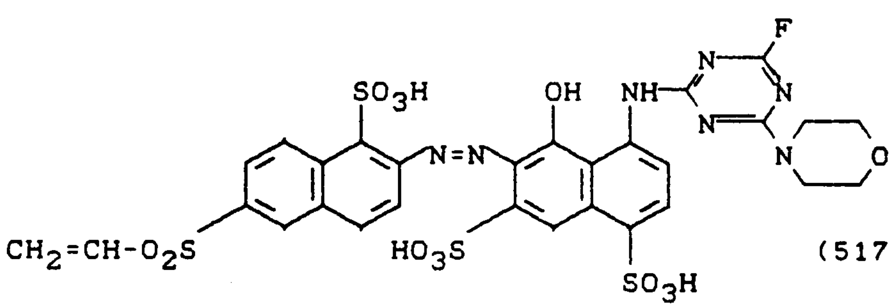

(517/534 nm)

Beispiel 7

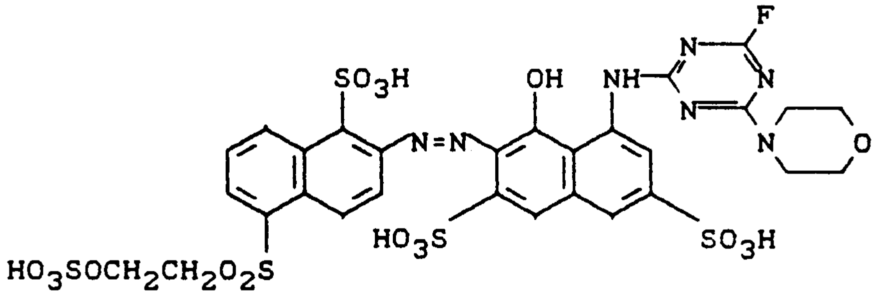

(542 nm)

Beispiel 8

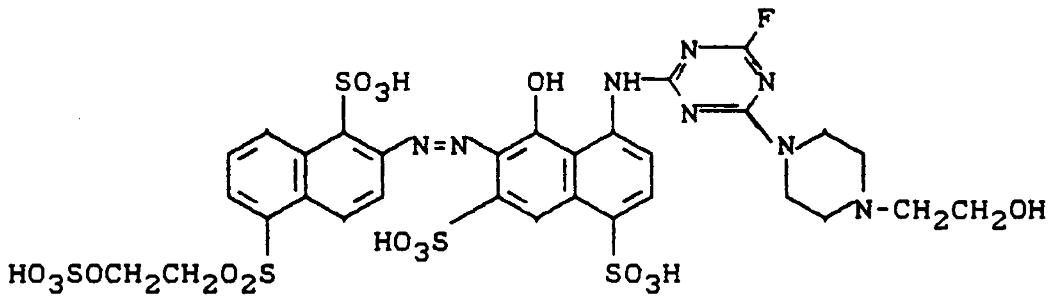

Beispiel 9

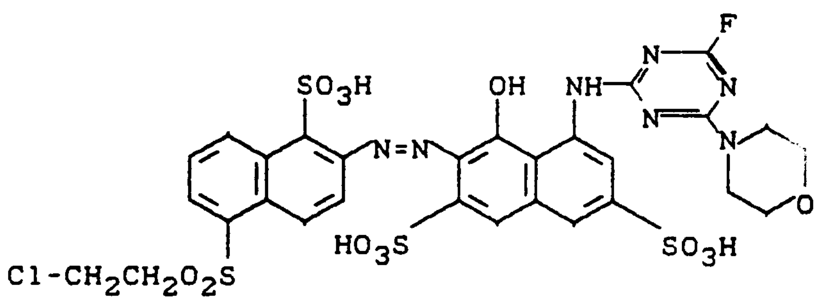

(542 nm)

Beispiel 10

Das Zwischenprodukt der Formel

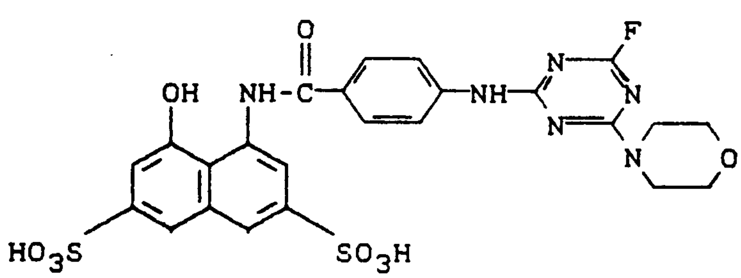

ist darstellbar, indem man 42,3 g 1-Hydroxy-8-(4-aminobenzoyl)amino-3,6-naphthalindisulfonsäure in 400 ml Wasser bei pH 7 anrührt, bei 0-5 °C und konstantem pH 4,0-4,5 mit 8,8 ml Trifluortriazin kondensiert und abschließend bei 5-10 °C und pH 8-9 mit 9 g Morpholin umsetzt. Der pH-Wert wird dabei jeweils mit 20

%iger Sodalösung konstant gehalten.

Zu dieser Reaktionsmischung fügt man bei 0-5 °C die analog Beispiel 1 hergestellte Diazoniumsalz-Suspension der 2-Amino-6-(2-sulfatoethyl)sulfonyl-1-naphthalinsulfonsäure und hält durch Zudosieren von Kaliumhydrogencarbonatlösung den pH-Wert zwischen 6,5 und 7,0. Es wird 30 Minuten nachgerührt, mit Natriumchlorid und Kaliumchlorid ausgesalzen, abgesaugt und getrocknet. Der so erhaltene Reaktivfarbstoff der Formel

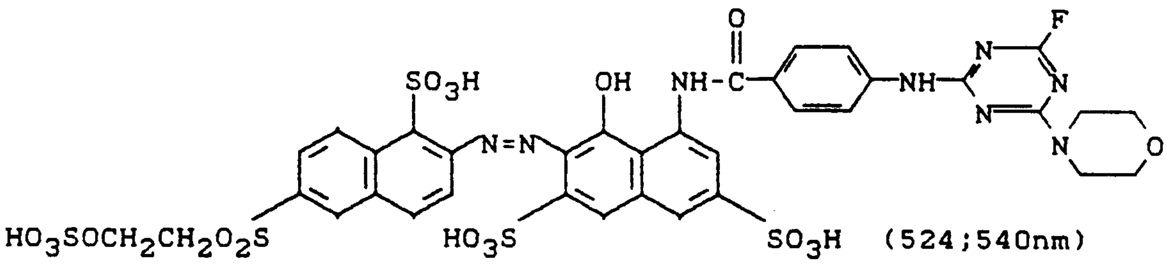

(524;540nm)

färbt Baumwolle in klaren blaustichig roten Tönen.

Verwendet man bei der Herstellung des Zwischenproduktes anstelle von Morpholin entsprechende Mengen Piperidin, Pyrrolidin, N-Hydroxyethylpiperazin, erhält man ebenfalls für die folgende Umsetzung geeignete Zwischenprodukte.

Die Zwischenprodukte lassen sich auch in üblicher Weise, z. B. durch Aussalzen, isolieren. Sie fallen im allgemeinen in Form farbloser kristalliner Produkte an.

Durch Variation der Kupplungskomponente, d.h. Einsatz von 1-Hydroxy-8-(2-aminobenzoyl)amino- bzw. 1-Hydroxy-8-(3-aminobenzoyl)amino-naphthalindisulfonsäure analog zur Vorschrift von Beispiel 10, sind folgende Rotfarbstoffe zugänglich:

Beispiel 11

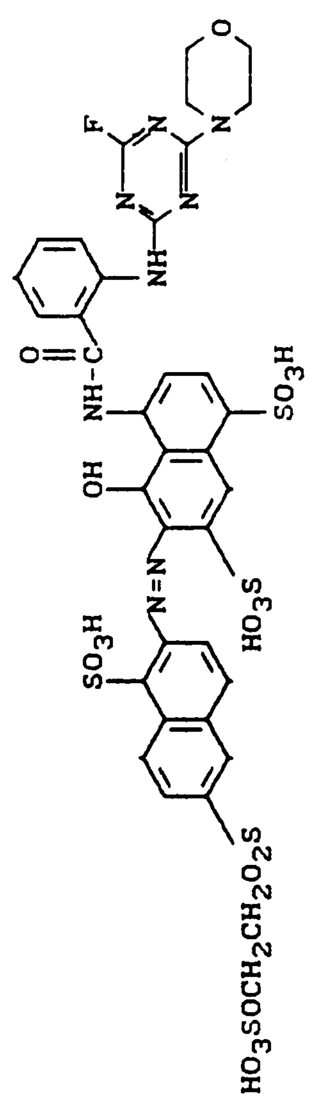

Beispiel 12

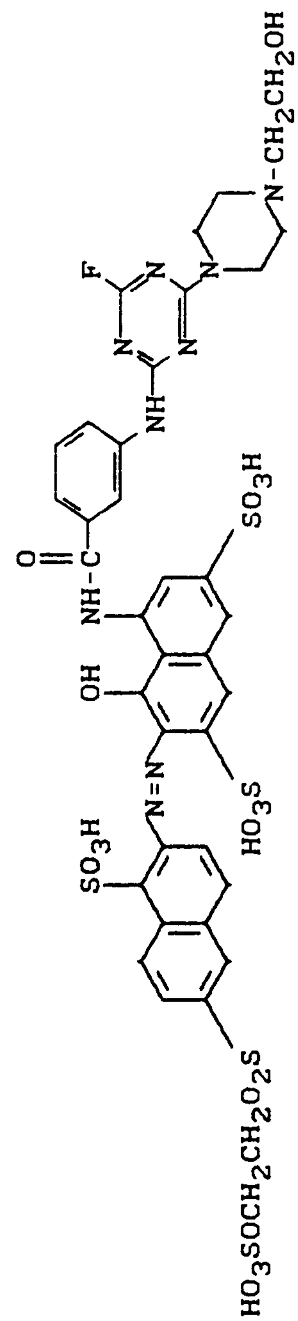

Beispiel 13

Ersetzt man in Beispiel 1 die 1-Hydroxy-8-amino-naphthalin-3,6-disulfonsäure durch eine äquivalente Menge an 1-Hydroxy-6-amino-3-naphthalinsulfonsäure, so erhält man einen Farbstoff der Formel

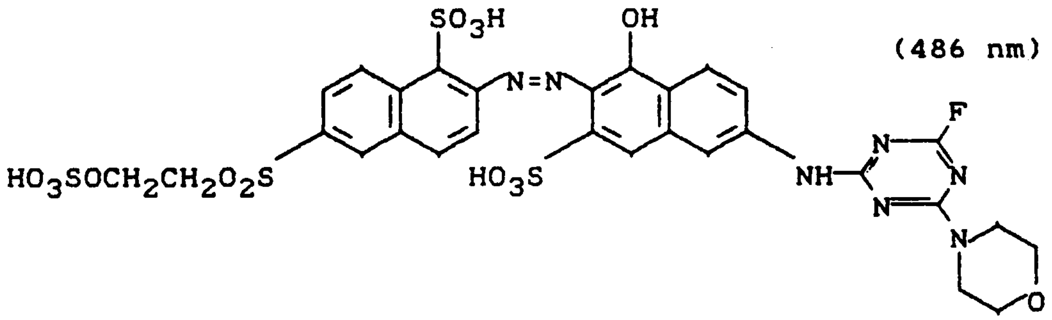

(486 nm)

der Baumwolle in klaren orangenen Tönen färbt. Nach der gleichen Methode sind durch Variation der Aminonaphthol-Kupplungskomponente folgende interessante Farbstoffe der allgemeinen Formel

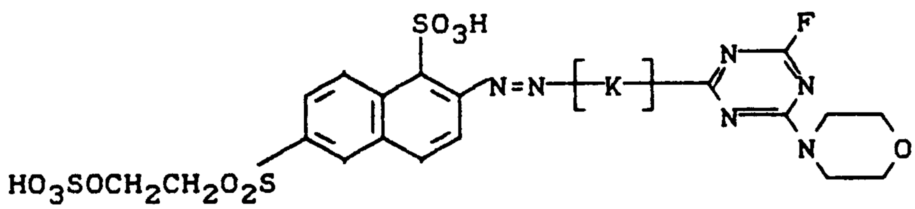

erhältlich.

Tabelle 1

| Bsp. | 14 | 15 | 16 |
|---|---|---|---|
| K | 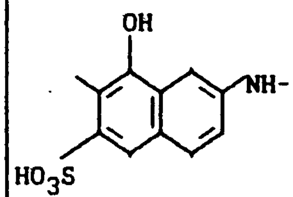 | 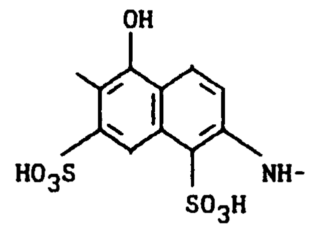 | 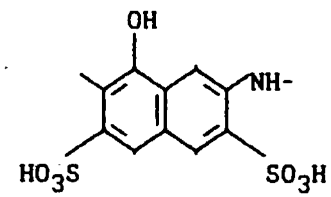 |
| Farbton [$\lambda_{max}$] | gelbstichig rot (408 nm) | orange | rot |

Tabelle 2

| Bsp. | 17 | 18 | 19 | 20 |
|---|---|---|---|---|
| K | 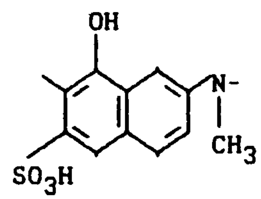 | 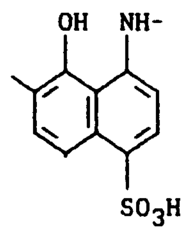 | 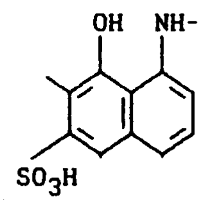 | 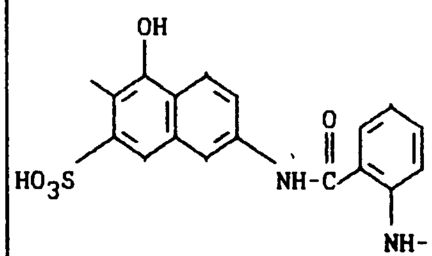 |
| Farbton | rot | rot | blaust. rot | orange |

Beispiel 21

Ersetzt man in Bsp. 13 die Diazokomponente durch 2-Amino-5-(2-Sulfatoethylsulfonyl)-1,7-naphthalindisulfonsäure und arbeitet ansonsten wie angegeben, erhält man den Farbstoff der Formel

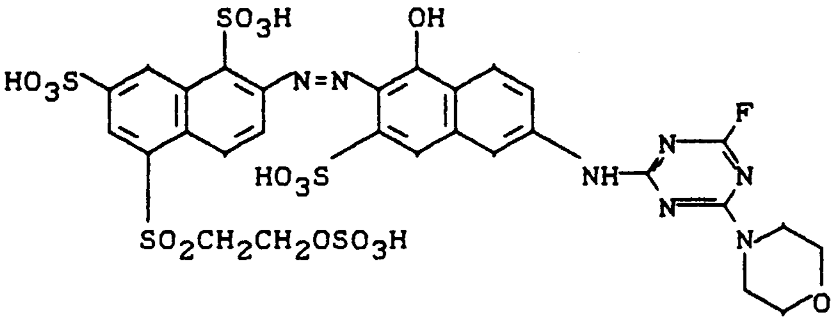

der Baumwolle in orangen Tönen färbt.

Beispiele 22-40

Analog Beispiel 1 lassen sich bei Verwendung der in der folgenden Tabelle aufgeführten Naphthalinsulfonsäuren und Amine weitere interessante Kupplungskomponenten der allgemeinen Formel

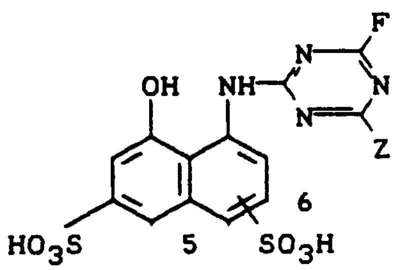

herstellen.

| Nr. | Stellung der Sulfonsäuregruppe | Z |
|---|---|---|
| 22 | 6 | 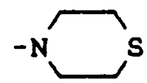 |
| 23 | 6 | 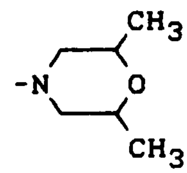 |
| 24 | 6 | 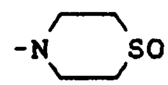 |
| 25 | 6 | 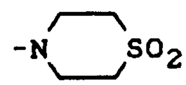 |
| 26 | 6 | 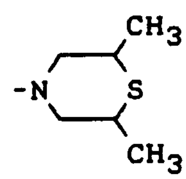 |

| Nr. | Stellung der Sulfonsäuregruppe | Z |
|---|---|---|
| 27 | 6 | 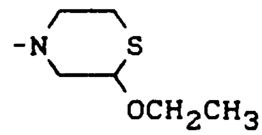 |
| 28 | 6 | 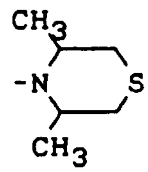 |
| 29 | 6 | 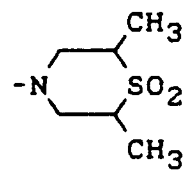 |
| 30 | 5 | 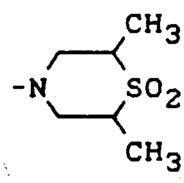 |
| 31 | 5 | 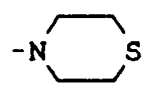 |
| 32 | 5 | 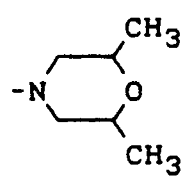 |
| 33 | 5 | 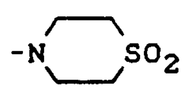 |
| 34 | 5 | 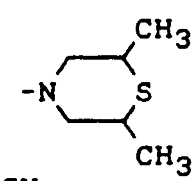 |
| 35 | 5 | 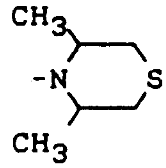 |

| Nr. | Stellung der Sulfonsäuregruppe | Z |
|---|---|---|
| 36 | 6 | 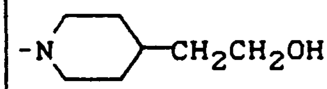 |
| 37 | 6 | 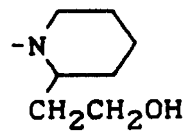 |
| 38 | 6 | 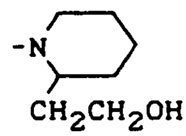 |
| 39 | 5 | 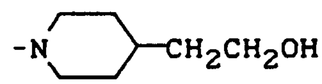 |
| 40 | 5 | 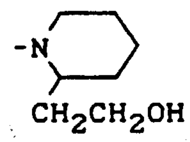 |

Beispiele 41-67

Unter Verwendung der in den Beispielen 22-40 hergestellten Kupplungskomponenten lassen sich mit den in der folgenden Tabelle aufgeführten Diazakomponenten weitere wichtige Farbstoffe der Formel

D-N = N-K

herstellen.

| Nr. | D | K = Kupplungskomponente aus Beispiel | Farbton |
|---|---|---|---|
| 41 | 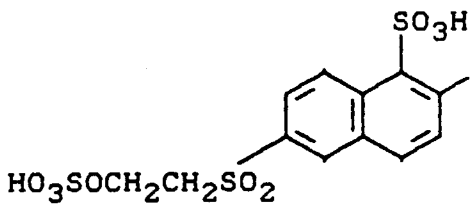 | 22 | blaustichiges Rot |
| 42 | " | 23 | " |
| 43 | " | 24 | " |
| 44 | " | 25 | " |
| 45 | " | 26 | " |
| 46 | " | 27 | " |
| 47 | " | 28 | " |
| 48 | " | 29 | " |
| 49 | " | 30 | Rot |
| 50 | " | 31 | " |
| 51 | " | 32 | " |
| 52 | " | 33 | " |
| 53 | " | 34 | " |
| 54 | " | 35 | " |

| Nr. | D | K = Kupplungskomponente aus Beispiel | Farbton |
|---|---|---|---|
| 55 | 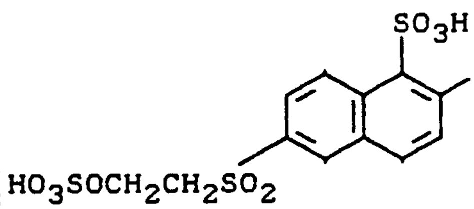 | 36 | blaustichiges Rot |
| 56 | " | 37 | " |
| 57 | " | 38 | " |
| 58 | " | 39 | Rot |
| 59 | " | 40 | " |
| 60 | 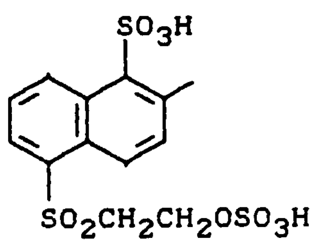 | 22 | blaustichiges Rot |
| 61 | " | 23 | " |
| 62 | " | 36 | " |
| 63 | " | 40 | Rot |
| 64 | 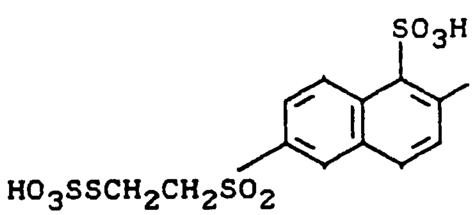 | 22 | blaustichiges Rot |
| 65 | " | 36 | " |

| Nr. | D | K = Kupplungskomponente aus Beispiel | Farbton |
|---|---|---|---|
| 66 | 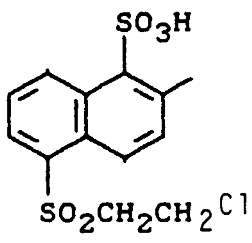 | 22 | blaustichiges Rot |
| 67 | " | 36 | " |

Behandelt man die Farbstoffe der Beispiele 41-63 in bekannter Weise mit Alkali, erhält man die entsprechenden Farbstoffe mit der Gruppe $-SO_2CH=CH_2$.

**Patentansprüche**

1. Faserreaktive Azofarbstoffe der Formel

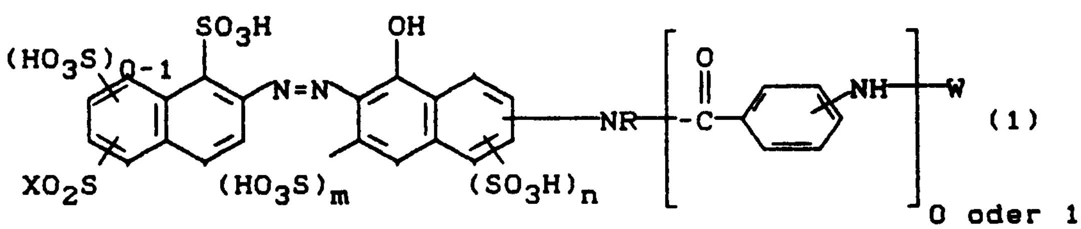

(1)

worin

m = 0 oder 1

n = 0 oder 1 wobei m + n = 1 oder 2,

X Vinyl, $CH_2CH_2$-Y, wobei Y einen unter alkalischen Bedingungen abspaltbaren Rest darstellt,

R = H oder $C_1$-$C_4$-Alkyl, wobei die Alkylgruppen gegebenenfalls durch OH, Halogen, $SO_3H$ oder $OSO_3H$ substituiert sein können,

W = Rest der Formel

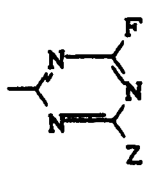

worin

Z = 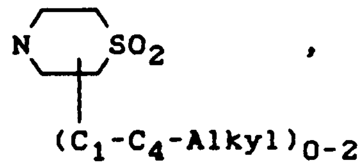 , 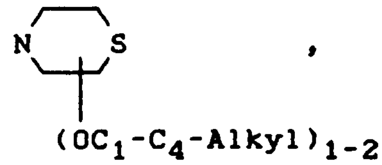 ,

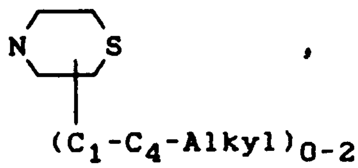 , 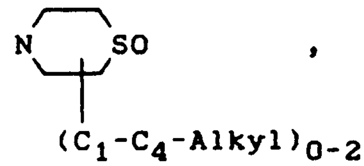 ,

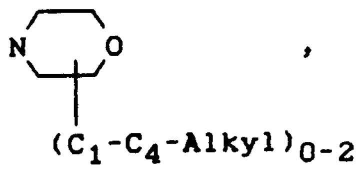 , 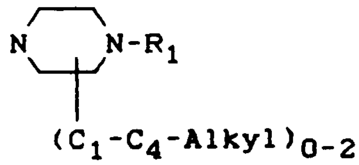 ,

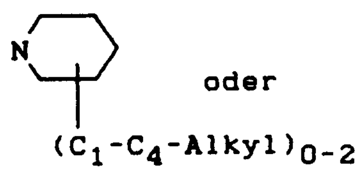 oder 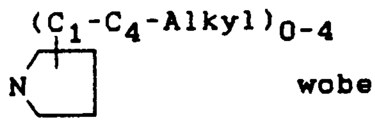 wobei

$R_1$ = H oder gegebenenfalls substituiertes $C_1$-$C_6$-Alkyl bedeutet und wobei die $C_1$-$C_4$-Alkylgruppen substituiert sein können.

**2.** Farbstoffe des Anspruchs 1 der Formel

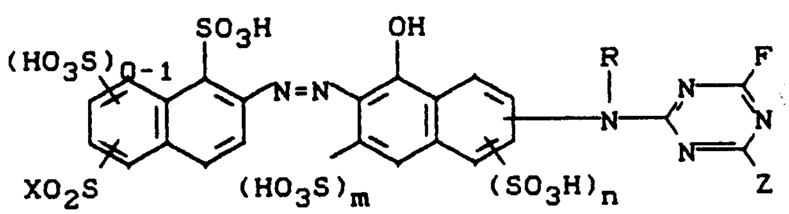 .

**3.** Farbstoffe der Ansprüche 1 und 2 mit R = H oder $CH_3$ und X = $CH_2CH_2$-$OSO_3H$ oder Vinyl.

**4.** Farbstoffe der Formeln

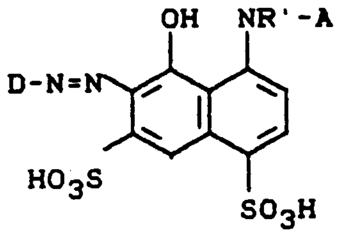
,
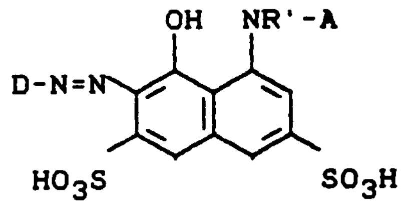
,

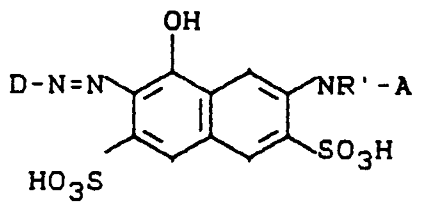
,
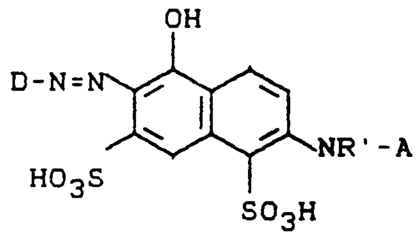
,

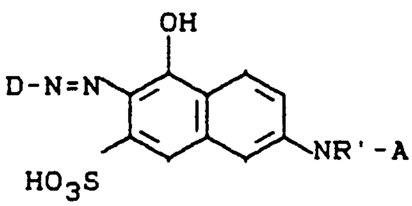
,
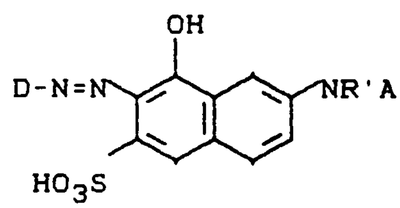
,

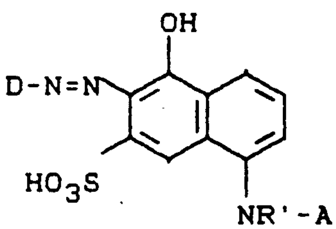
,
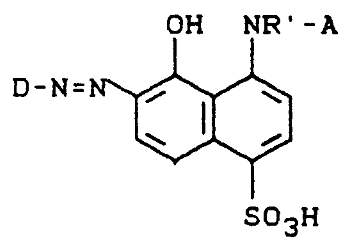
,

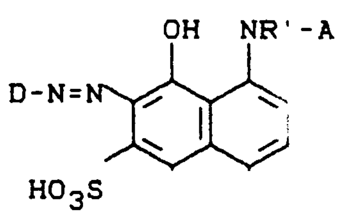

worin

D = 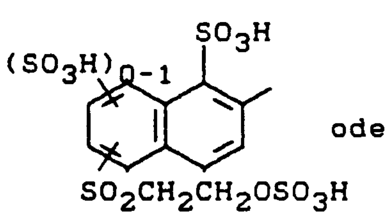 oder 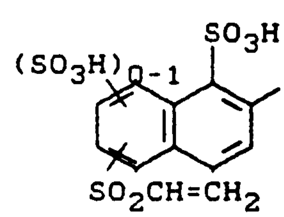

R′ = H, $CH_3$ und

A = 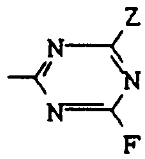 .

5. Farbstoffe des Anspruches 4 mit R′ = H und

Z = 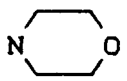 .

6. Farbstoffe der Formeln

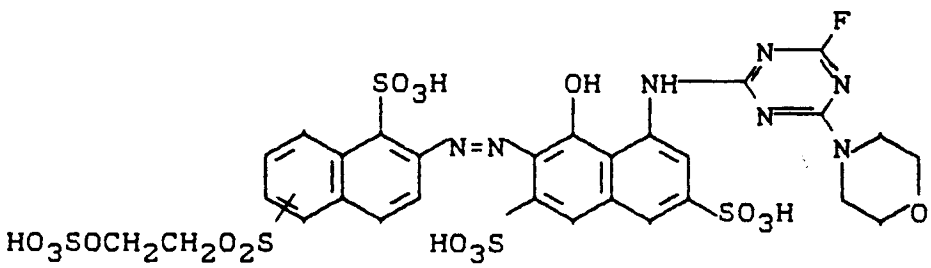

und

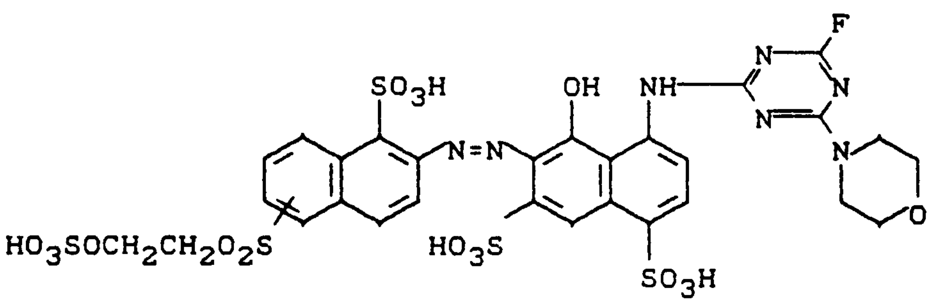 .

7. Verwendung der Farbstoffe der Ansprüche 1-6 zum Färben und Bedrucken von hydroxyl- und amidgruppenhaltigen Materalien.

8. Mit den Farbstoffen der Ansprüche 1-6 gefärbte oder bedruckte hydroxyl- und amidgruppenhaltige Materialien.

9. Verbindungen der Formel

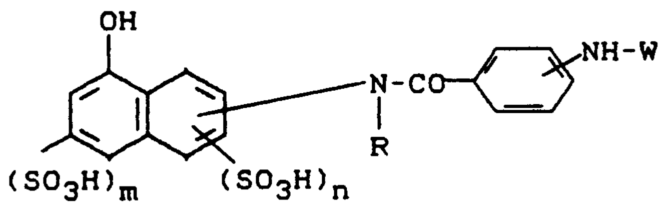

sowie der Formel

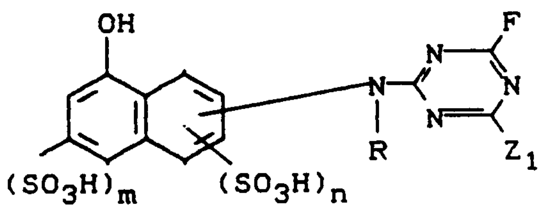

worin
R, m und n sowie W die in Anspruch 1 angegebene Bedeutung haben und

$Z_1$ = 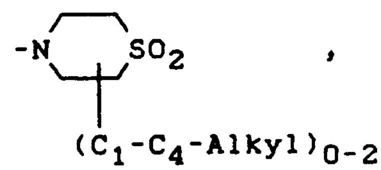 , 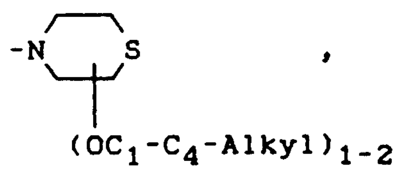 ,

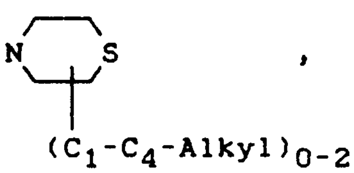 , 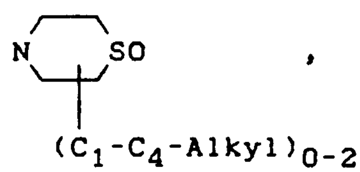 ,

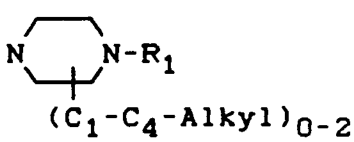 , 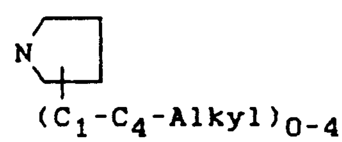 ,

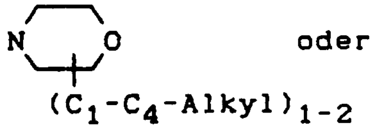 oder 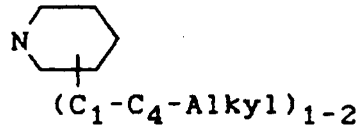

wobei
$R_1$ = durch wasserlöslich machende Substituenten substituiertes $C_1$-$C_6$-Alkyl,
und wobei die $C_1$-$C_4$-Alkylgruppen substituiert sein können.

**Claims**

1. Fibre-reactive azo dyestuffs of the formula

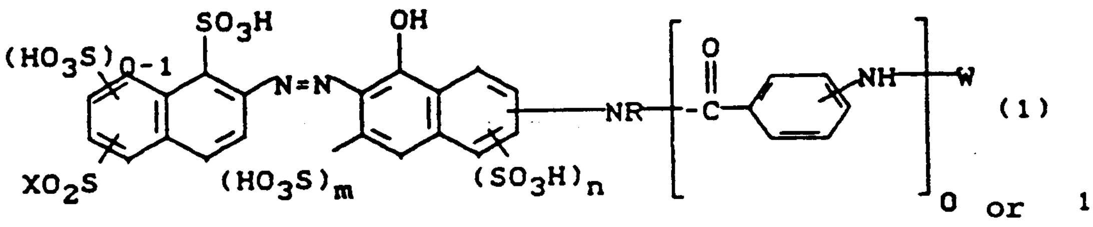

(1)

in which

m = 0 or 1

n = 0 or 1 where m + n = 1 or 2,

X denotes vinyl or $CH_2CH_2$-Y, Y representing a radical which can be eliminated under alkaline conditions,

R = H or $C_1$-$C_4$-alkyl, it being possible for the alkyl groups to be substituted by OH, halogen, $SO_3H$ or $OSO_3H$,

W = radical of the formula

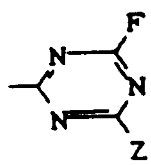

in which

Z = 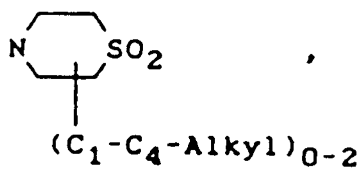 , 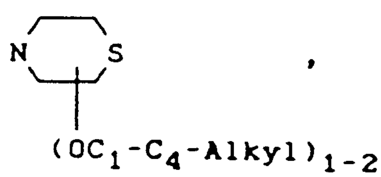 ,

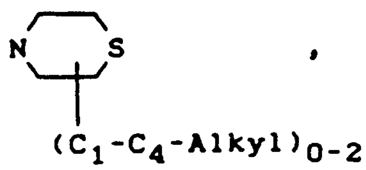 , 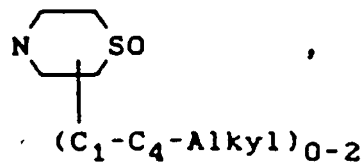 ,

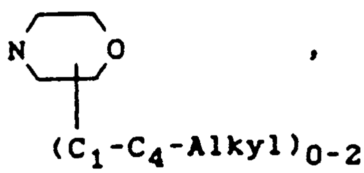 , 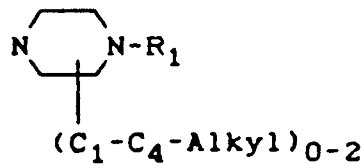 ,

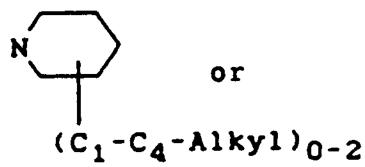 or 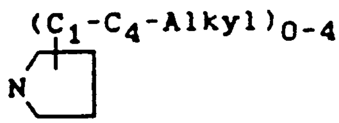

where
$R_1$ = H or denotes substituted or unsubstituted $C_1$-$C_6$-alkyl, and where the $C_1$-$C_4$-alkyl groups can be substituted.

2. Dyestuffs of Claim 1 of the formula

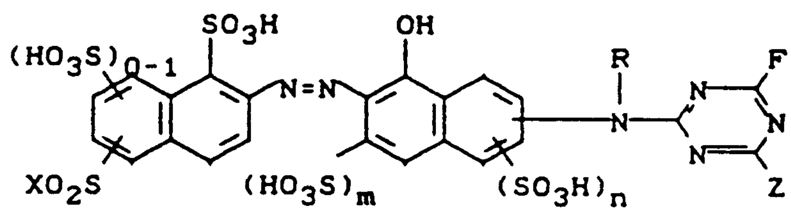

3. Dyestuffs of Clams 1 and 2 where R = H or $CH_3$ and X = $CH_2CH_2$-$OSO_3H$ or vinyl.

4. Dyestuffs of the formulae

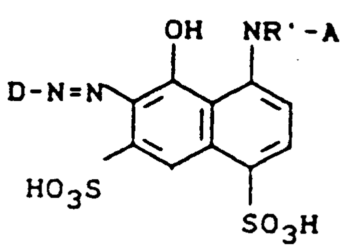 , 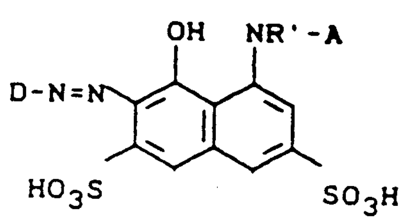 ,

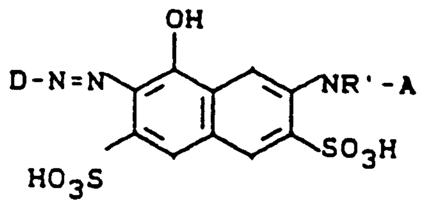,

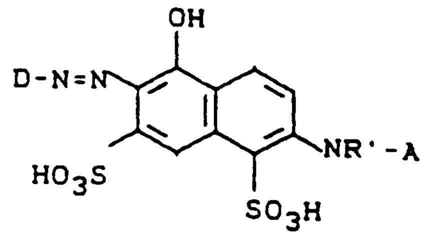,

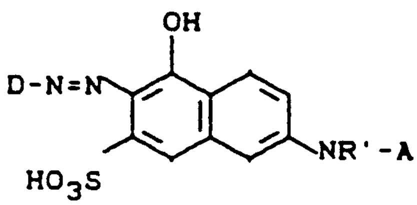,

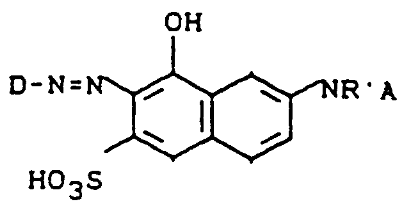,

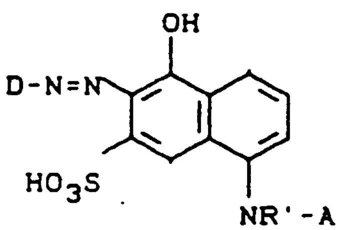,

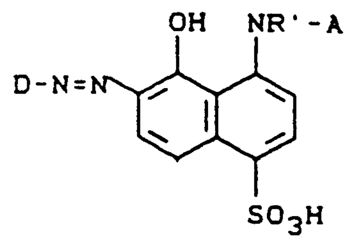,

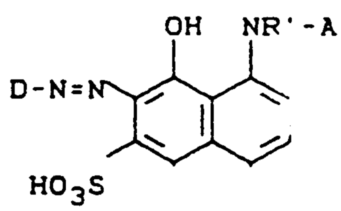

in which

D = 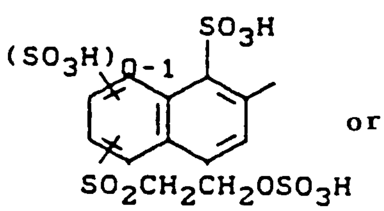 or 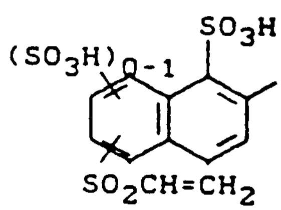

R′ = H, $CH_3$ and

A = 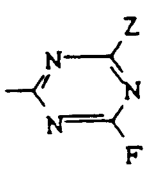 .

**5.** Dyestuffs of Claim 4 where R' = H and Z =

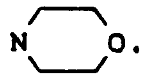

6. Dyestuffs of the formulae

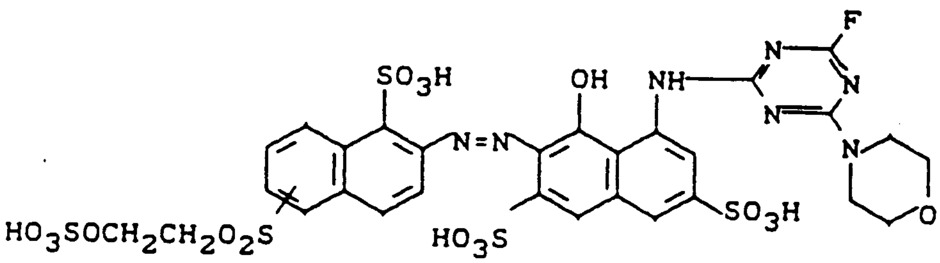

and

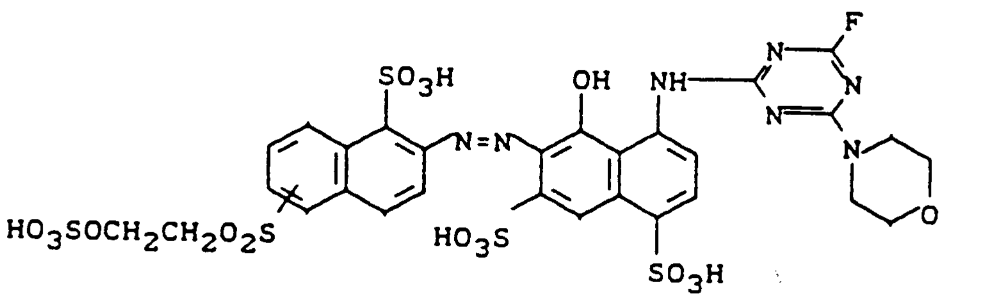

7. Use of the dyestuffs of Claims 1-6 for dyeing and printing hydroxyl- and amido-containing materials.

8. Hydroxyl- and amido-containing materials dyed or printed with the dyestuffs of Claims 1-6.

9. Compounds of the formula

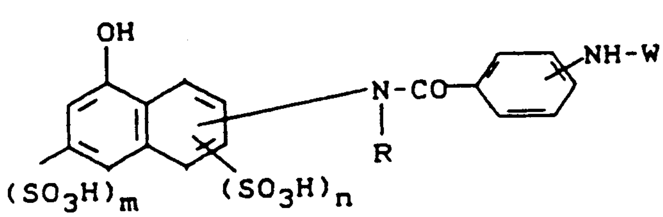

and also of the formula

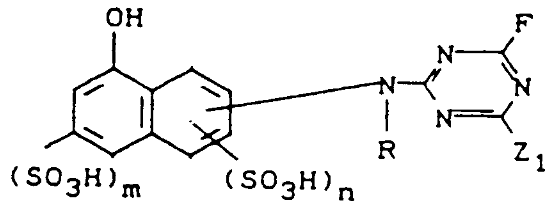

in which
R, m and n and also W have the meanings given in Claim 1 and

$Z_1$ = 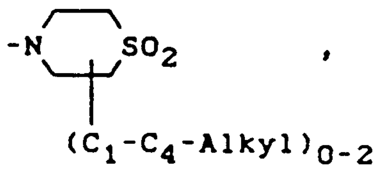 , 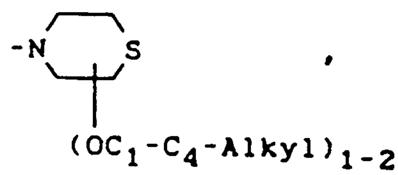 ,

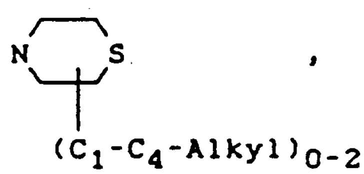 , 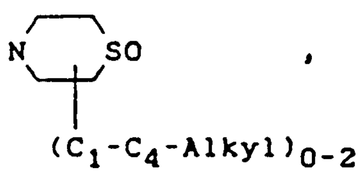 ,

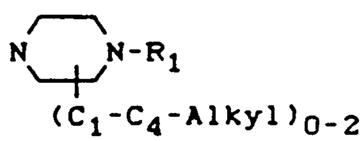 , 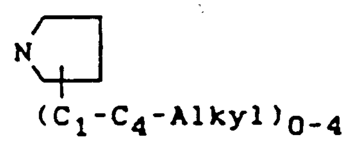 ,

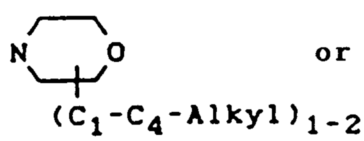 or 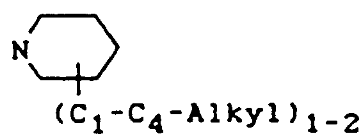

where
$R_1$ = $C_1$-$C_6$-alkyl substituted by water-solubilizing substituents
and where the $C_1$-$C_4$-alkyl groups can be substituted.

## Revendications

**1.** Colorants azoïques réactifs avec les fibres, de formule

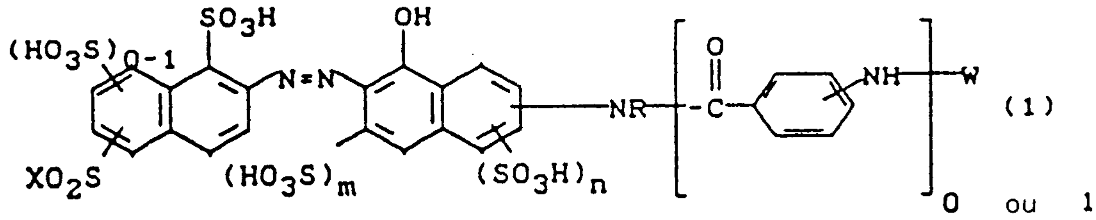

(1)

dans laquelle

m = 0 ou 1

n = 0 ou 1 et m + n = 1 ou 2,

X représente un groupe vinyle, $CH_2CH_2$-Y dans lequel Y représente un substituant éliminable en milieu alcalin,

R = H ou alkyle en $C_1$-$C_4$, les groupes alkyle pouvant le cas échéant être substitués par OH, des halogènes, $SO_3H$ ou $OSO_3H$,

W = groupe de formule

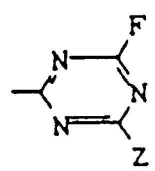

dans laquelle

Z = 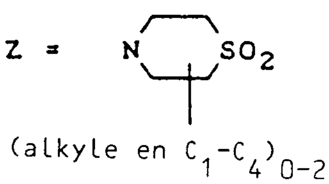 , 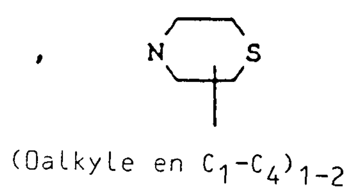 ,

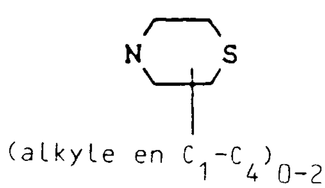 , 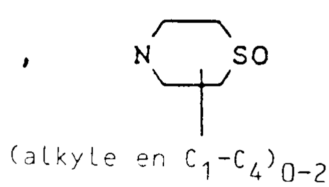 ,

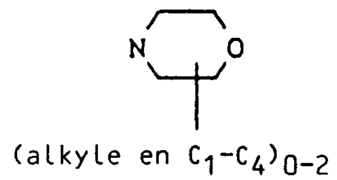 , 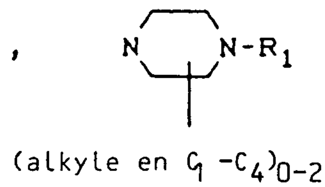 ,

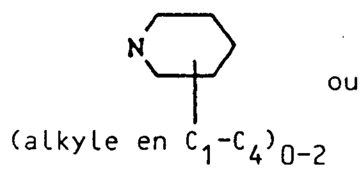 ou 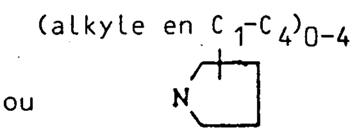 avec

$R_1$ = H ou alkyle en $C_1$-$C_6$ éventuellement substitué, les groupes alkyle en $C_1$-$C_4$ pouvant être substitués.

2. Colorants de la revendication 1, de formule

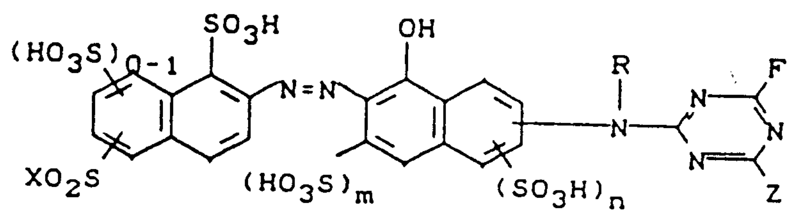

3. Colorants des revendications 1 et 2, pour lesquels R = H ou $CH_3$ et X = $CH_2CH_2$-$OSO_3H$ ou vinyle.

4. Colorants de formules

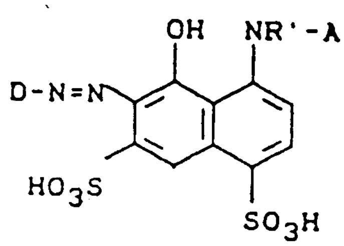 , 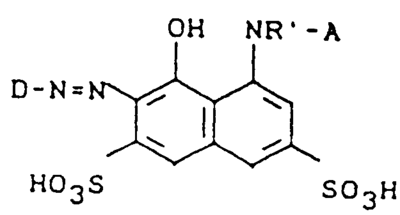 ,

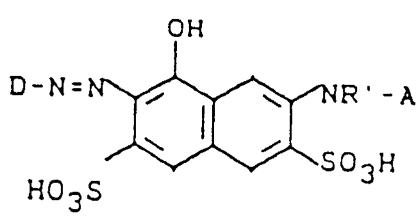 , 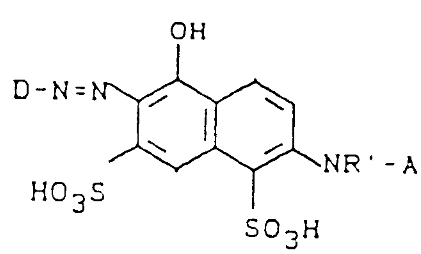 ,

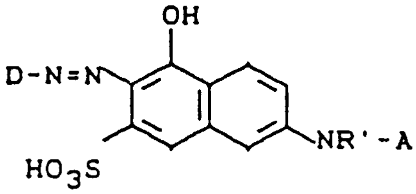 ,

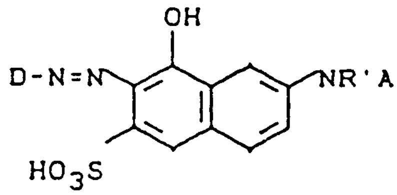 ,

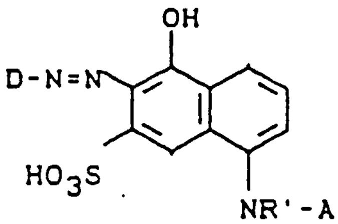 ,

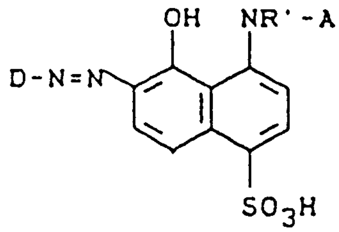 ,

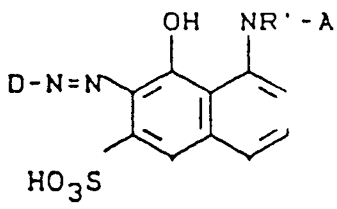

dans lesquelles

D = 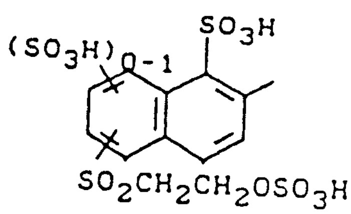 ou 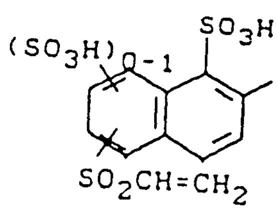

R' = H, $CH_3$ et

A = 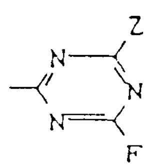 .

**5.** Colorants de la revendication 4, pour lesquels R' = H et

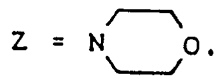

6. Colorants de formules

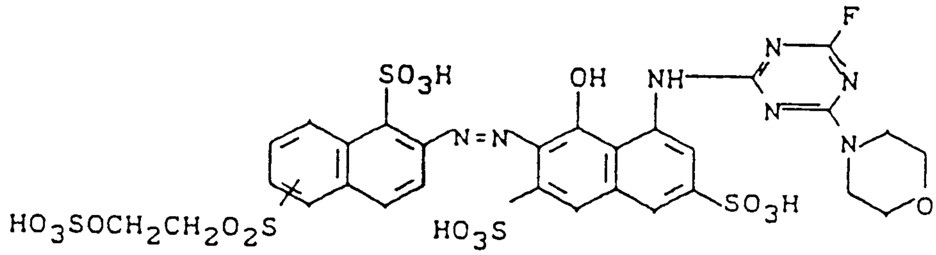

et

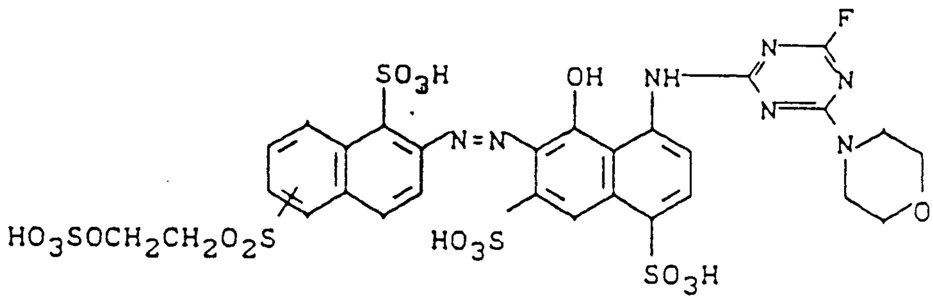

7. Utilisation des colorants des revendications 1 à 6 pour la teinture et l'impression de matières contenant des groupes hydroxy et des groupes amides.

8. Matières contenant des groupes hydroxy et des groupes amides, teintes ou imprimées par les colorants des revendications 1 à 6.

9. Composés de formule

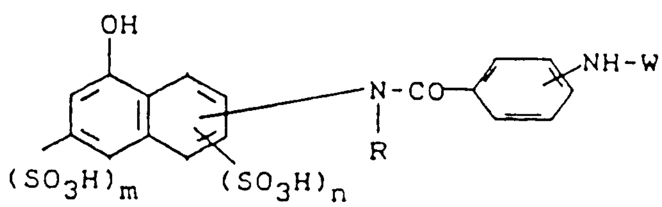

et de formule

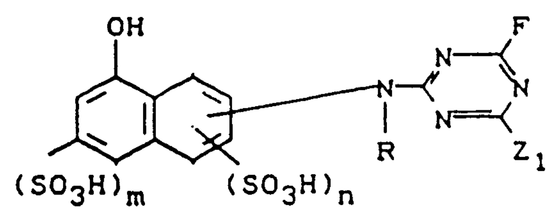

dans lesquelles
R, m, n et W ont les significations indiquées dans la revendication 1 et

$Z_1$ = 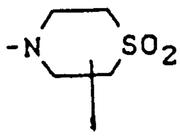
(alkyle en $C_1$-$C_4$)$_{0-2}$

, 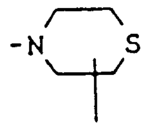
(Oalkyle en $C_1$-$C_4$)$_{1-2}$

,

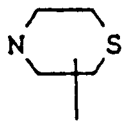
(alkyle en $C_1$-$C_4$)$_{0-2}$

, 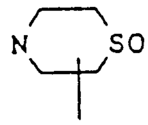
(alkyle en $C_1$-$C_4$)$_{0-2}$

,

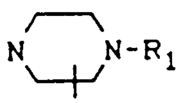
(alkyle en $C_1$-$C_4$)$_{0-2}$

, 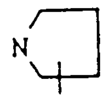
(alkyle en $C_1$-$C_4$)$_{0-4}$

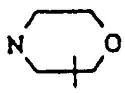
(alkyle en $C_1$-$C_4$)$_{1-2}$

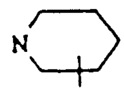
(alkyle en $C_1$-$C_4$)$_{1-2}$

avec
$R_1$ = alkyle en $C_1$-$C_6$ portant des substituants hydrosolubilisants, les groupes alkyle en $C_1$-$C_4$ pouvant être substitués.